# EUROPÄISCHE PATENTSCHRIFT

(11) **EP 1 459 928 B1**
(45) Veröffentlichungstag und Bekanntmachung des Hinweises auf die Patenterteilung: **09.05.2007**
(21) Anmeldenummer: 04003243.5
(22) Anmeldetag: 13.02.2004
(51) Int. Cl.: B60K 31/04

(54) **Vorrichtung zum Beschleunigen und/oder Verzögern eines Kraftfahrzeugs und Verfahren zur Einstellung der Geschwindigkeit eines Kraftfahrzeugs**
Apparatus for acceleration and/or deceleration of a vehicle and method for controlling speed of a vehicle
Appareil pour d'accélération et de décélération d'un vehicule et Méthode de commande de vitesse d'un vehicule

(30) Priorität: 21.03.2003 DE 10312547
(43) Veröffentlichungstag der Anmeldung: 22.09.2004
(73) Patentinhaber: AUDI AG, 85045 Ingolstadt (DE)
(72) Erfinder: Mäusbacher, Bernhard, 85080 Gaimersheim (DE); Landsiedel, Thomas, 85110 Kipfenberg (DE)
(74) Vertreter: Thielmann, Frank

(56) Entgegenhaltungen:
- EP-A- 0 930 192
- DE-A1- 4 404 594
- DE-A1- 10 064 307

## Beschreibung

Die Erfindung betrifft eine Vorrichtung zum Beschleunigen und/oder Verzögern eines Kraftfahrzeugs und ein Verfahren zur Einstellung der Geschwindigkeit eines Kraftfahrzeugs.

Eine Anlage zum Beschleunigen oder Verzögern eines Kraftfahrzeugs wird üblicherweise derart gesteuert, dass der Fahrer die Geschwindigkeit des Kraftfahrzeugs direkt regelt, indem er den Volumenstrom des Kraftstoffs für den Motor mittels eines Gaspedals und den Radbremsdruck mittels eines Bremspedals einstellt. Gaspedal und Bremspedal sind in der Regel als Fußpedale ausgestaltet. Das Wirkprinzip dieser Fußpedale besteht im Durchlaufen eines Schwenkweges infolge eines Betätigungsdrucks auf das Pedal. Aus diesem Pedalweg wird bei Pedalen, die mechanisch von der Aktorik der Anlage entkoppelt sind, ein Signal erzeugt, das zur Steuerung der Antriebsbeziehungsweise Bremsanlage weitergeleitet wird.

Die Verwendung von Pedalen bringt eine Reihe von Nachteilen mit sich. Beispielsweise stellen Fußpedale, die in den Fußraum des Fahrers hineinragen, ein erhöhtes Verletzungsrisiko für den Fahrer des Kraftfahrzeugs dar, da diese im Crashfall in den Fußraum hineinschwenken können. Weiterhin entsteht durch den Betätigungsweg des Pedals eine längere Schwellzeit bis zum vollen Einsatz der Bremskraft oder der Beschleunigung. Ebenfalls ist bei Fußpedalen nachteilig, dass wenn der Fahrer seine Sitzposition falsch wählt, er in Notsituationen nicht in der Lage ist, das Pedal entsprechend weit zu treten.

In der nicht vorveröffentlichten DE 102 39 913 A1 wird daher ein Betätigungsmittel zum Beeinflussen einer Anlage zum Bremsen, Kuppeln oder Antreiben eines Kraftfahrzeugs vorgeschlagen, das mechanisch von der Akder Anlage entkoppelt ist und ein ausschließlich die Betätigungskraft des Fahrers detektierender Aufnehmer ist, der ein Steuersignal erzeugt, dessen Erzeugung von einem Betätigungsweg unabhängig ist und keinen Betätigungsweg hat.

Aus der Druckschrift DE 44 04 594 A1 ,das die Merkmale des Oberbegriffs der Ansprüche 1 und 11 zeigt, ist eine Bedieneinrichtung zum Beschleunigen und/oder Abbremsen eines Kraftfahrzeugs bekannt, welche ein Bedienelement aufweist. Das Bedienelement ist relativ zum Kraftfahrzeug bezüglich wenigstens zweier Verstell-Freiheitsgrade, welche eine Translationsbewegung und/oder eine Rotationsbewegung umfassen, vom Fahrer des Kraftfahrzeugs verstellbar. Abhängig von der Krafteinwirkung auf das Bedienelement wird dieses somit gemäß einer bestimmten Betätigungsart selbst bewegt, wobei abhängig von dieser Bewegung des Bedienelements ein entsprechendes Beschleunigen oder Abbremsen des Kraftfahrzeugs generiert wird.

Aus der Druckschrift DE 28 29 894 A1 ist weiterhin eine Vorrichtung zur selbsttätigen Regelung der Fahrgeschwindigkeit eines Kraftfahrzeugs mit Verbrennungsmotor bekannt. Dabei wird ein Sollwert, der von einem fußpedalbetätigten Sollwertgeber vorgegeben wird, laufend mit einem Istwert verglichen, der durch ein Messorgan ermittelt wird. Bei einer Abweichung zwischen dem Sollwert und dem Istwert wird mittels eines Reglers ein Stellglied verändert, um die Abweichung zu beseitigen. Demnach wird die Fahrgeschwindigkeit nicht mehr direkt, sondern indirekt durch Regelung der Beschleunigung oder der Verzögerung geregelt, so dass bei einer zuvor eingestellten Wunschgeschwindigkeit kein weiterer Beschleunigungs- bzw. Verzögerungssollwert vom Fahrer vorgegeben werden muss und der das Gaspedal bzw. das Bremspedal bedienende Fuß des Fahrers frei wird.

Der Nachteil der bekannten Vorrichtungen liegt darin, dass diese den Eigenschaften des Fahrers oder Wünschen des Fahrers bezüglich des Fahrverhaltens nicht individuell Rechnung tragen können.

Aufgabe der vorliegenden Erfindung ist es daher, eine Vorrichtung zum Beschleunigen und/oder Verzögern eines Kraftfahrzeugs und ein Verfahren zur Einstellung der Geschwindigkeit eines Kraftfahrzeugs zu schaffen, wobei die Flexibilität der Vorrichtung gesteigert werden soll und dennoch der Fahrkomfort erhöht werden kann, die Gestaltung eines crash-optimierten Fußraums ermöglicht werden, sowie der Anhalteweg verkürzt werden kann.

Diese Aufgabe wird gemäß einem ersten Aspekt der Erfindung gelöst durch eine Vorrichtung zum Beschleunigen und/oder Verzögern eines Kraftfahrzeugs, die zumindest ein Betätigungselement aufweist, wobei das Betätigungselement durch das Aufbringen einer Betätigungskraft betätigt wird und weitestgehend wegfrei arbeitet. Die Vorrichtung zeichnet sich dadurch aus, dass die Vorrichtung in mindestens zwei fahrerspezifischen Modi betrieben werden kann. Durch die Ausgestaltung der Vorrichtung in dieser Art kann somit individuellen Fahrerwünschen oder Fahrereigenschaften Rechnung getragen werden.

Vorzugsweise weist die Vorrichtung zumindest eine Umschalteinrichtung auf, mittels derer der Modus der Vorrichtung eingestellt werden kann. Durch das Vorsehen einer solchen Umschalteinrichtung kann es dem Fahrer des Kraftfahrzeugs ermöglicht werden, den von ihm gewünschten Modus selbst zu wählen.

Die Modi unterscheiden sich in einer Ausführungsform bezüglich der Beschleunigungs- oder Verzögerungswerte, die einer Betätigungskraft zugeordnet sind. Diese individuelle Zuordnung von Werten bezüglich der Beschleunigung oder der Verzögerung zu Werten der Betätigungskraft kann bei der erfindungsgemäßen Vorrichtung verwendet werden, da im Gegensatz zu herkömmlichen pedalbetätigten Vorrichtungen nicht der Pedalweg, sondern ausschließlich die Betätigungskraft für die Bestimmung des Beschleunigungs- oder Verzögerungswunsches des Fahrers verwendet wird. Wird in einem Modus beispielsweise eine geringe Kraft einem bestimmten Beschleunigungs- oder Verzögerungswert zugeordnet, so kann in diesem Modus das Kraftfahrzeug komfortabel auch von einer Person betätigt werden, die nur eine geringe Kraft aufbringen kann. Wird in einem anderen Modus diesen Verzögerungs- oder Beschleunigungswerten eine höhere Kraft zugeordnet, so kann das Kraftfahrzeug sicher von einer kräftigeren Person bedient werden. Diese unterschiedlichen Modi, in denen die Vorrichtung betrieben werden kann, sind geeignet die Sicherheit zu steigern. Würde beispielsweise nur ein einziger Modus sowohl für eine zierliche Fahrerin als auch für einen kräftigeren Fahrer zur Verfügung stehen, so könnte ein eingestelltes mittleres Kraftniveau für die zierliche Fahrerin wegen der für Sie zu hohen Kräfte unkomfortabel erscheinen, gleichzeitig kann dieses Kraftniveau einem kräftigen Fahrer wegen der für ihn zu niedrigen Kräfte die Dosierung erschweren.

Denkbar ist auch eine automatische Einstellung der kraftvariierenden Modi anhand der Informationen Sitzeinstellung und/oder Fahrergewicht und/oder Fahrergröße.

Vorzugsweise ist jedem Modus eine Kennlinie für die Umwandlung eines Signals bezüglich der Betätigungskraft in einen Wert für die Beschleunigung oder Verzögerung des Kraftfahrzeugs zugeordnet. Durch das Vorsehen mehrerer Kennlinien für die Umwandlung, die je nach gewähltem Modus verwendet werden, kann die Berücksichtigung der fahrerspezifischen Fähigkeit der Kraftaufbringung über den gesamten Beschleunigungs- oder Verzögerungsbereich sichergestellt werden.

Alternativ oder zusätzlich kann die Vorrichtung eine Reglereinheit zum Regeln der Geschwindigkeit des Kraftfahrzeugs aufweisen und die einstellbaren Modi können sich bezüglich der Berücksichtigung von Einflüssen auf die Verzögerung oder Beschleunigung des Kraftfahrzeugs, die nicht unmittelbar von der Betätigungskraft auf die Betätigungsmittel abhängen, bei der Einstellung der Geschwindigkeit des Kraftfahrzeugs unterscheiden. Durch diese Modi wird es möglich, das von dem Fahrer gewünschte Kraftfahrzeugverhalten einzustellen.

Vorzugsweise wird in einem Modus die Geschwindigkeit des Kraftfahrzeugs nach Wegnahme der Betätigungskraft konstant gehalten und in einem anderen Modus wirken Einflüsse auf die Verzögerung oder Beschleunigung des Kraftfahrzeugs und werden nicht ausgeregelt. Der erste Modus kann auch als Komfort-Modus und der zweite Modus als Sport-Modus bezeichnet werden. In dem Komfort-Modus werden in der Reglereinheit Einflüsse, die die Verzögerung oder die Beschleunigung des Kraftfahrzeugs beeinflussen und unabhängig von der Betätigungskraft sind, ausgeregelt. Solche Einflüsse können Umgebungs- oder Kraftfahrzeugbedingungen und insbesondere einstellbare Größen sein. Umgebungsbedingungen können beispielsweise die Steigung der Fahrbahn sein. Kraftfahrzeugbedingungen sind beispielsweise der Roll- oder der Luftwiderstand, die Fahrzeugmasse, Verlustmomente von Motor und Getriebe und Übersetzung. In dem Sportmodus können diese Einflüsse bei der Regelung unberücksichtigt bleiben. Dies bedeutet, dass die Einflüsse wirken und zu einer Verzögerung oder Beschleunigung des Kraftfahrzeugs, die unabhängig von der Betätigung der Betätigungselemente ist, führt. Diese Geschwindigkeitsänderung muss dann durch den Fahrer durch erneutes/variierendes Betätigen des oder der Betätigungselemente ausgeglichen werden.

In einer Ausführungsform umfasst die Vorrichtung eine Auswahleinheit, in der ein Auswahlmenü enthalten ist, aus dem der Fahrer des Kraftfahrzeugs unterschiedlichen Modi manuell auswählen kann. In dieser Auswahleinheit können die unterschiedlichen Einstellungen, die den einzelnen Modi zugeordnet sind, mit Bezeichnungen der Modi verbunden sein. So kann ein Modus, der als "kräftiger Fahrer und Sport-Modus" bezeichnet sein kann, mit der Einstellung verbunden sein, dass eine Kennlinie für die Umwandlung der Kraft in Beschleunigungs- oder Verzögerungswerte verwendet wird, bei der erst höheren Betätigungskraftwerten Beschleunigungs- oder Verzögerungswerte zugeordnet sind, die eine gewissen Wert aufweisen. Gleichzeitig ist in der Auswahleinheit mit der Bezeichnung dieses Modus die Einstellung verbunden, dass ein Logikblock, in dem in der Reglereinheit Einflüsse auf die Beschleunigung oder Verzögerung des Kraftfahrzeugs, die von der Betätigungskraft unabhängig sind, berücksichtigt werden, abgeschaltet wird. Vorzugsweise wird die Vorrichtung bezüglich der Einstellung der Umwandlung der Kraft in Verzögerungs- oder Beschleunigungswerte eine Normaleinstellung aufweisen, bei der, wenn vom Fahrer diesbezüglich kein Modus gewählt wurde, mittlere Werte für die Umwandlung gewählt werden.

Vorzugsweise umfasst die Vorrichtung eine Anzeigevorrichtung, die zumindest das Auswahlmenü anzeigt. Durch die Anzeige des Auswahlmenüs wird der Fahrer über die einstellbaren Modi informiert und kann den für ihn geeigneten Modus auswählen. Durch die Auswahl werden in der Vorrichtung die für den ausgewählten Modus notwendigen Einstellungen vorgenommen und das Kraftfahrzeug kann in diesem Modus betrieben werden.

Die Vorrichtung kann weiterhin eine Anzeigevorrichtung umfassen, die den ausgewählten Modus anzeigt. Durch die Anzeige des aktuell eingestellten Modus kann die Sicherheit der Vorrichtung gesteigert werden, da es dem Fahrer beispielsweise angezeigt wird, dass er sich im Sportmodus befindet und daher selber Geschwindigkeitsänderungen ausgleichen muss. Auch kann durch die Anzeige des aktuellen Modus verhindert werden, dass beispielsweise ein zierliche Fahrerin versehentlich versucht die Vorrichtung in einem Modus zu betreiben, der für kräftige Fahrer ausgelegt ist. Dies könnte zu einer Gefahr führen, da die Fahrerin gegebenenfalls nicht in der Lage ist die für eine maximale Verzögerung notwendige Betätigungskraft aufzubringen.

Die Anzeigevorrichtungen für das Auswahlmenü und für den ausgewählten Modus können in einer Einheit zusammengefasst sein. Die Anzeige kann beispielsweise über das Display am Armaturenbrett oder an der Mittelkonsole des Kraftfahrzeugs erfolgen.

Gemäß einem weiteren Aspekt wird die Aufgabe, die der vorliegenden Erfindung zugrunde liegt, gelöst durch ein Verfahren zum Betreiben eines Kraftfahrzeugs, das zumindest ein Betätigungselement zum Beschleunigen oder Verzögern des Kraftfahrzeugs aufweist, wobei das Betätigungselement im wesentlichen wegfrei arbeitet. Das Verfahren zeichnet sich dadurch aus, dass der Fahrer des Kraftfahrzeugs einen Modus auswählt, in dem die Vorrichtung zum Beschleunigen oder Verzögern des Kraftfahrzeugs betrieben werden soll und in Abhängigkeit des ausgewählten Modus die Betätigungskraft auf das mindestens eine Betätigungsmittel in einen Wert für eine Verzögerung oder Beschleunigung des Kraftfahrzeugs umgewandelt wird und/oder Einflüsse auf die Beschleunigung oder Verzögerung des Kraftfahrzeugs, die unabhängig von der Betätigungskraft sind, in eine Regelung der Geschwindigkeit des Kraftfahrzeugs einbezogen werden.

Die Modi, in denen die Vorrichtung betrieben werden kann, können beliebige Kombinationen der Einstellungen bezüglich der Berücksichtigung von Einflüssen (z.B. "Sport", ""Komfort") und der Einstellungen bezüglich der Kraft (z.B. "Dame", "Herr", "Normal") sein.

Die Vorteile und Merkmale, die bezüglich der Vorrichtung beschrieben werden, gelten - soweit anwendbar - entsprechend für das Verfahren und umgekehrt.

Die Erfindung wird im folgenden anhand von Figuren näher erläutert. Es zeigen:
Figur 1: eine schematische Darstellung einer Ausführungsform einer Vorrichtung zum Beschleunigen oder Verzögern eines Kraftfahrzeugs gemäß der vorliegenden Erfindung;
Figur 2: eine schematische Darstellung einer weiteren Ausführungsform einer Vorrichtung zum Beschleunigen oder Verzögern eines Kraftfahrzeugs gemäß der vorliegenden Erfindung, und
Figur 3: einen möglichen Verlauf einer optimierten Kennlinie, wie sie bei der erfindungsgemäßen Vorrichtung angewendet werden kann.

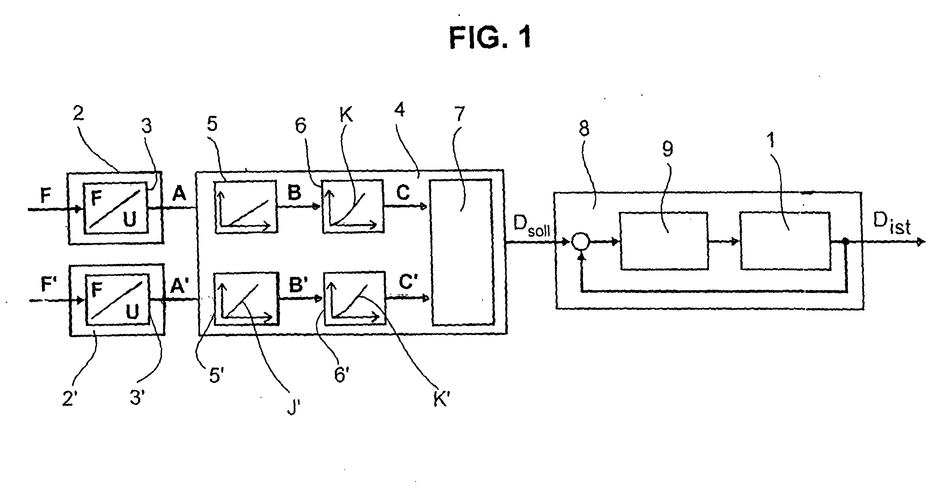

Die in Figur 1 gezeigte Vorrichtung zum Beschleunigen oder Verzögern eines Kraftfahrzeugs 1 weist zwei Betätigungselemente 2, 2' auf. Diese Betätigungselemente 2, 2' sind in der Praxis als Handbetätigungen oder Fußbetätigungen ausgestaltet, wobei das erste Betätigungselement 2 zum Beschleunigen und das zweite Betätigungselement 2' zum Verzögern des Kraftfahrzeugs 1 dient.

Die beiden Betätigungselemente 2, 2' sind von der Aktorik zum Beschleunigen oder zum Verzögern des Kraftfahrzeugs mechanisch entkoppelt, stehen aber elektrisch damit in Verbindung. Die Betätigung der Betätigungselemente 2, 2' erfolgt weitestgehend wegfrei, das heißt ohne eine für den Fahrer des Kraftfahrzeugs 1 spürbare Veränderung der Stellung der Betätigungselemente 2, 2'. Hierzu umfassen das erste Betätigungselement 2 und das zweite Betätigungselement 2' in der dargestellten Ausführungsform jeweils ein Signalerfassungsglied 3, 3', wie beispielsweise einen piezokeramischen Kraftaufnehmer, Dehnungsmessstreifen oder Drehmomentenaufnehmer, die auch redundant ausgeführt sein können. Durch das Signalerfassungsglied 3, 3' wird eine vom Fahrer des Kraftfahrzeugs 1 bei Betätigung des ersten oder zweiten Betätigungselements 2, 2' aufgebrachte Hand- oder Fußkraft F, F' erfasst und proportional dazu in ein elektrisches Spannungssignal A, A' umgewandelt. Dabei können innerhalb der Betätigungselemente 2, 2' und/oder innerhalb der Signalerfassungsglieder 3, 3' auch Plausibilitätsbetrachtungen der Ein- und Ausgangssignale durchgeführt werden.

Nachfolgend ist dem ersten und zweiten Betätigungselement 2, 2' eine Einrichtung zur Signalverarbeitung 4 mit ersten Signalverarbeitungsgliedern 5, 5', zweiten Signalverarbeitungsgliedern 6, 6' sowie einer Kombinationseinheit 7 zugeordnet.

Das erste Signalverarbeitungsglied 5, 5' wandelt das elektrische Spannungssignal A, A' des Signalerfassungsgliedes 3, 3' anhand einer ersten Kennlinie J, J' in ein Beschleunigungs- oder Verzögerungssignal B, B' um.

Das zweite Signalverarbeitungsglied 6, 6' wandelt das Beschleunigungs- oder Verzögerungssignal B, B' des ersten Signalverarbeitungsgliedes 5, 5' anhand einer zweiten optimierten Kennlinie K, K' in ein optimiertes Beschleunigungs- bzw. Verzögerungssignal C, C' um.

Grundsätzlich könnten die ersten und zweiten Signalverarbeitungsglieder 5 und 6 bzw. 5' und 6' aber auch zu jeweils einem Signalerfassungsglied 5+6 bzw. 5'+6' zusammengefasst sein, so dass dementsprechend auch die beiden Kennlinien J und K bzw. J' und K' zu einer optimierten Kennlinie zusammengefasst wären.

Die optimierten Beschleunigungs- und Verzögerungssignale C, C' werden anschließend in der Kombinationseinheit 7 zusammengeführt, in dieser Kombinationseinheit 7 wird in der dargestellten Ausführungsform ein Sollwertsignal Dₛₒₗₗ generiert, das zum Beschleunigen oder Verzögern des Kraftfahrzeugs 1 ausgegeben wird. Dabei bewirkt die Kombinationseinheit 7, dass das aus dem optimierten Beschleunigungs- und Verzögerungssignal C, C' generierte Sollwertsignal Dₛₒₗₗ für die Beschleunigung bzw. Verzögerung des Kraftfahrzeugs 1 bei einer vollständigen Wegnahme der auf das erste oder zweite Betätigungselement 2, 2' aufgebrachten Betätigungskraft F, F' auf Null gesetzt wird, was dem Wunsch nach Konstanthalten der Geschwindigkeit entspricht. Zudem kann in der dargestellten Ausführungsform die Kombinationseinheit 7 bewirken, dass ein optimiertes Beschleunigungssignal C sicherheitshalber nur dann als Sollwertsignal Dₛₒₗₗ ausgegeben wird, wenn kein optimiertes Verzögerungssignal C' vorliegt.

Das Sollwertsignal Dₛₒₗₗ der Beschleunigung bzw. Verzögerung wird daraufhin einer Regeleinrichtung 8 der Beschleunigung oder Verzögerung des Kraftfahrzeugs 1 zugeführt. Die Regeleinrichtung 8 umfasst in der dargestellten Ausführungsform einen Regler 9 und regelt die Beschleunigung bzw. Verzögerung anhand des vom Kraftfahrzeug 1 erreichten Ist-Wertsignal Dᵢₛₜ der Beschleunigung nach.

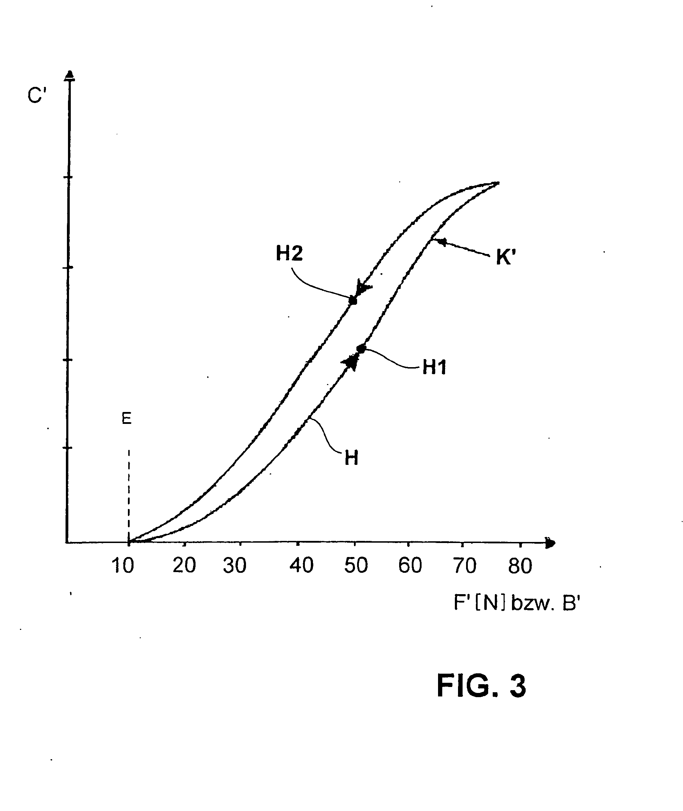

Beispielhaft für das zweite Betätigungselement 2', das zum Verzögern des Kraftfahrzeugs 1 dient, ist bei der in Figur 3 gezeigten Darstellung eine optimierte Kennlinie K' gezeigt, wobei die Hand- oder Fußkraft F' bzw. das Verzögerungssignal B' auf der Ordinate und das optimierte Verzögerungssignal C' auf der Abzisse aufgetragen ist.

Die optimierte Kennlinie K' weist eine Hysterese H auf. Dabei ist der ansteigende erste Zweig H1 der Hystereseschleife gegenüber dem abfallenden zweiten Zweig H2 der Hystereseschleife ähnlich ausgebildet, jedoch zu geringeren Werten des Verzögerungssignals B' versetzt. Aufgrund der Hysterese H der optimierten Kennlinie K' zeigt die Vorrichtung zum Beschleunigen oder Verzögern eines Kraftfahrzeugs 1 besondere Komfortmerkmale.

In ihrem unteren Bereich zeigt die optimierte Kennlinie K' bis zu einem Schwellenwert E von beispielsweise 10 Newton, der auch als Betätigungssuchkraft bezeichnet wird, kein optimiertes Verzögerungssignal C', so dass über die zweite Betätigungseinrichtung 2' auch keine Ansteuerung der Vorrichtung zum Beschleunigen oder Verzögern des Kraftfahrzeugs 1 erfolgt. Erst oberhalb des Schwellenwertes E wird ein optimiertes Verzögerungssignal C' ausgegeben und die Vorrichtung angesteuert.

Die optimierte Kennlinie K' ist jedoch nicht nur beim zweiten Betätigungselement 2' zum Verzögern des Kraftfahrzeugs 1, sondern natürlich auch beim ersten Betätigungselement 2 zum Beschleunigen des Kraftfahrzeugs 1 vorteilhaft einsetzbar. Denn auch dort ist eine Hystere H und ein Schwellenwert E sinnvoll.

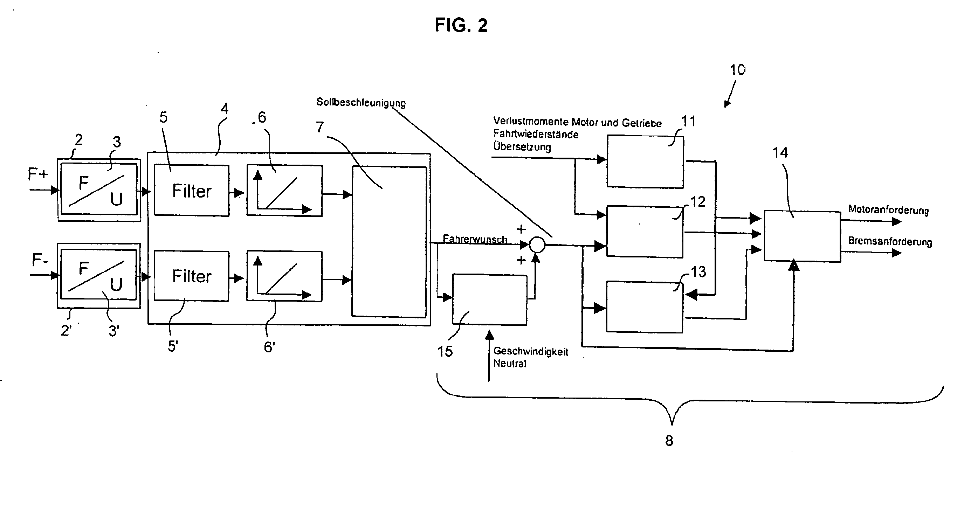

In Figur 2 ist eine weitere Ausführungsform der erfindungsgemäßen Vorrichtung zum Beschleunigen und/oder Verzögern des Kraftfahrzeugs dargestellt.

Auch in dieser Ausführungsform weist die Vorrichtung zum Beschleunigen oder Verzögern eines Kraftfahrzeugs zwei Betätigungselemente 2, 2' auf, wobei das erste Betätigungselement 2 zum Beschleunigen und das zweite Betätigungselement 2' zum Verzögern des Kraftfahrzeugs 1 dient.

Die beiden Betätigungselemente 2, 2' sind, wie bei der Ausführungsform in Figur 1, von der Aktorik zum Beschleunigen oder zum Verzögern des Kraftfahrzeugs mechanisch entkoppelt, stehen aber elektrisch damit in Verbindung und die Betätigung der Betätigungselemente 2, 2' erfolgt weitestgehend wegfrei. Das erste Betätigungselement 2 und das zweite Betätigungselement 2' umfassen in der dargestellten Ausführungsform jeweils ein Signalerfassungsglied 3, 3', wie beispielsweise einen piezokeramischen Kraftaufnehmer, Dehnungsmessstreifen oder Drehmomentenaufnehmer, die auch redundant ausgeführt sein können. Durch das Signalerfassungsglied 3, 3' wird eine vom Fahrer des Kraftfahrzeugs 1 bei Betätigung des ersten oder zweiten Betätigungselements 2, 2' aufgebrachte Hand- oder Fußkraft F, F' erfasst und proportional dazu in ein elektrisches Spannungssignal A, A' umgewandelt. Dabei können innerhalb der Betätigungselemente 2, 2' und/oder innerhalb der Signalerfassungsglieder 3, 3' auch Plausibilitätsbetrachtungen der Ein- und Ausgangssignale durchgeführt werden.

In der dargestellten Ausführungsform ist den Signalerfassungsgliedern 3, 3' jeweils als erstes Signalverarbeitungsglied 5, 5' der Signalverarbeitungseinheit 4 ein Filter nachgeschaltet, von dem aus ein gefiltertes elektrisches Spannungssignal an ein zweites Signalverarbeitungsglied 6, 6' geliefert wird. In dem zweiten Signalverarbeitungsglied 6, 6' wird anhand einer Kennlinie das elektrische Spannungssignal in ein Beschleunigungs- bzw. Verzögerungssignal umgewandelt. Die Kennlinie ist in der dargestellten Ausführungsform so gewählt, dass diese einen linearen Verlauf aufweist und einen Schwellenwert besitzt, unterhalb dessen eine Betätigungskraft als Betätigungssuchkraft angesehen wird.

Diesen beiden Verarbeitungsgliedern 6, 6' ist eine Kombinationseinheit 7 nachgeschaltet. In der Kombinationseinheit 7 wird eine Summe aus den eingehenden Beschleunigungs- bzw. Verzögerungssignalen gebildet und/oder ein Beschleunigungswunsch wird nur dann weitergeleitet, wenn kein Verzögerungswunsch vorliegt.

Der Kombinationseinheit 7 ist eine Reglereinheit 8 nachgeschaltet, die in der dargestellten Ausführungsform zumindest einen Regler 15 und eine Logikeinheit 10 umfasst. Der Regler 15, der in der dargestellten Ausführungsform einen Geschwindigkeitsregler darstellt, ist zwischen die Kombinationseinheit 7 und die Logikeinheit 10 geschaltet und wird bei Vorliegen gewisser Voraussetzungen aktiviert. Sind diese Voraussetzungen nicht erfüllt, so wird das Ausgangssignal der Kombinationseinheit 7 unmittelbar weitergeleitet.

Eine Bedingung zu der der Regler 15 aktiv ist, ist die Nicht-Betätigung der Betätigungselemente 2, 2' durch den Fahrer. In diesem Fall gibt die Kombinationseinheit 7 eine Fahrerwunschbeschleunigung von Null aus. Der Regler 15 speichert die Fahrzeuggeschwindigkeit, die beim Übergang von Betätigung des oder der Betätigungselemente 2, 2' auf Nicht-Betätigung anliegt als erstes Eingangssignal und regelt diese Geschwindigkeit mittels eines PI-Reglers ein. In der Gangstellung "Neutral", die das zweite Eingangssignal des Reglers 15 darstellt, wird der Regler 15 deaktiviert. Der Regelausgang wird der Fahrerwunschbeschleunigung überlagert, d.h. mit dieser addiert. Ist der Regler 15 aktiv, so ist die Fahrerwunschbeschleunigung gleich Null und ist der Regler 15 inaktiv, so ist der Reglerausgang gleich Null. Das Ergebnis dieser Überlagerung stellt die Sollbeschleunigung des Kraftfahrzeugs dar.

Dieser Wert der Sollbeschleunigung wird der Logikeinheit 10 zugeführt. In dieser ist in der dargestellten Ausführungsform ein Logikblock 11 für Antriebsverzögerung, ein Logikblock 12 für den Antrieb und ein Logikblock 13 für die Bremse vorgesehen. Weiterhin umfasst die Logikeinheit 10 einen Logikblock 14 für die Koordination. Der Ausgang dieser Logikeinheit 14 gibt die Motor- und Bremsanforderungen an, die an die Aktorik der Bremse oder des Motors, beispielsweise in Form von Steuersignalen für die entsprechenden Steuergeräte, geleitet werden können.

Mit dem Logikblock 11 für die Antriebsverzögerung ist mindestens eine Bestimmungseinheit (nicht dargestellt) für die Bestimmung unterschiedlicher Einflüsse verbunden. Von den Bestimmungseinheiten werden Werte für beispielsweise Fahrtwiderstände, wie den Roll- und Luftwiderstand, die Fahrzeugmasse und die Fahrbahnsteigung geliefert, wobei die beiden letztgenannten auch durch Schätzungen ermittelt werden können. Weiterhin werden Werte über Verlustmomente Motor/Getriebe und die Übersetzung bestimmt. Aus diesen Werten wird in dem Logikblock 11 für die Antriebsverzögerung die durch das Motorschleppmoment maximal mögliche Verzögerung berechnet.

Wie sich aus Figur 2 ergibt, wird der Wert der Sollbeschleunigung an die Logikblöcke für den Antrieb 12 und die Bremse 13 geleitet.

Der Logikblock für den Antrieb 12 berechnet aufgrund von Fahrtwiderständen, Verlustmomenten Motor/Getriebe, der Übersetzung und der Sollbeschleunigung die zur Einstellung dieser Sollbeschleunigung notwendige Motoranforderung. Wohingegen der Logikblock für die Bremse 13 aus der Verzögerung durch Motorschleppmoment, der Sollbeschleunigung und den Fahrtwiderständen die zur Einstellung dieser Sollbeschleunigung notwendige Bremsanforderung berechnet.

Sollte die von dem Logikblock 11 für die Antriebsverzögerung ermittelte maximale Verzögerung ausreichen um die Fahrerwunschbeschleunigung einzustellen, so schaltet die Logik-Koordination 14 den Ausgang des Logikblocks für den Antrieb 12 durch. Dies bedeutet, dass die Logikeinheit 10 nur auf den Antrieb des Kraftfahrzeugs wirkt, insbesondere diesen ansteuert. Reicht die maximale Verzögerung nicht aus, um die gewünschte Fahrzeugbeschleunigung einzustellen, so schaltet die Logik-Koordination 14 den Ausgang des Logikblocks der Bremse 13 durch, d.h. die Logikeinheit 10 wirkt nur auf die Bremse des Kraftfahrzeugs bzw. steuert diese an.

Werden im Logikblock 11 die Fahrtwiderstände oder Teile daraus nicht berücksichtigt, so werden Einflüsse, die unabhängig von der Betätigung oder Nicht-Betätigung der Betätigungselemente zu einer Beschleunigung oder Verzögerung des Kraftfahrzeugs führen, in der Reglereinheit 8 nicht mehr berücksichtigt. Die nicht berücksichtigten Fahrtwiderstände bzw. Teile daraus wirken somit und müssen vom Fahrer bzw. bei Fahrerwunschbeschleunigung Null vom Regler ausgeglichen werden.

In einer bevorzugten Ausführungsform kann der Fahrer zwischen einem Sport- und einem Komfortmodus wählen. Im Sportmodus ist der Geschwindigkeitsregler 15 immer deaktiviert. Der Fahrer muß somit zum Konstanthalten der Geschwindigkeit die Geschwindigkeit über die Betätigungselemente regeln. Der Vorteil des Sportmodus liegt in der reduzierten Anzahl der Umstiegsvorgänge, d.h. Wechseln des Fusses vom Beschleunigungs- zum Bremspedal und umgekehrt, beim Herantasten an die Fahrzeuggrenzgeschwindigkeit. Im Komfortmodus ist der Geschwindigkeitsregler nur bei Fahrerbeschleunigungswunsch Null aktiv. Bei Nichtbetätigung behält das Fahrzeug seine Geschwindigkeit bei.

Die Erfindung ist nicht auf die dargestellten Ausführungsformen beschränkt.

Mit der erfindungsgemäßen Vorrichtung können eine Anzahl von Vorteilen erzielt werden. So kann bei gleicher Fahrzeugaußenlänge die Innenraumlänge durch den Wegfall der Pedalwege um ca. 120mm gegenüber herkömmlichen Fahrzeugen verlängert werden. Dieser Längenunterschied entspricht dem Längenunterschied zu der nächst höheren Fahrzeugklasse. Wird auf einen Stufensprung, d.h. ein versetztes Anordnen der Betätigungselemente, verzichtet, so kann der Anhalteweg bei der erfindungsgemäßen Vorrichtung auf zweifache Weise verringert werden. Zum einen wird der Anhalteweg aufgrund des Verzichts des Stufensprungs und zum anderen durch den Verzicht des Pedalwegs verkürzt und somit die Sicherheit erhöht. Weiterhin kann die Vorrichtung durch Zweifußbedienung ohne Probleme betätigt werden, da das Beschleunigungs- und das Verzögerungssignal miteinander verarbeitet werden. Bei herkömmlichen Fahrzeugen besteht die Gefahr, dass bei falsch gewählter Sitzposition die notwendigen langen Pedalwege bzw. die hohen Pedalkräfte, die insbesondere für eine Notbremsung erforderlich sind, vom Fahrer nicht erreicht werden können. Bei der vorliegenden Erfindung durchlaufen die Betätigungselemente keinen Schwenkbereich. Ist der Fahrer daher in der Lage, aus seiner Sitzposition heraus eine Komfortbremsung durchzuführen, so kann er aus dieser Sitzposition heraus auch eine Notbremsung ausführen.

Eine besonders bevorzugte Ausführungsform des Sportmodus zeichnet sich dadurch aus, dass keine Geschwindigkeitsregelung während der Nichtbetätigung vorgenommen wird, aus Komfortgründen möglichst alle Einflüsse, wie Fahrtwiderstände, Rollreibung, Steigung, Masse, Motor- und Getriebeverlustmoment, berücksichtigt werden, jedoch in Untermodi ein verzicht auf Fahrtwiderstände und/oder der Steigung und/oder der Masse zur Unterstreichung der Sportlichkeit möglich ist.

Eine besonders bevorzugte Ausführungsform des Komfortmodus zeichnet sich dadurch aus, dass eine Geschwindigkeitsregelung vorhanden ist und aus Komfortgründen möglichst alle Einflüsse, wie Fahrtwiderstände, Rollreibung, Steigung, Masse, Motor- und Getriebeverlustmoment, berücksichtigt werden.

Das Merkmal der Kraftvariation, insbesondere in den drei Stufen leicht, mittel, schwer, ist sowohl mit dem Sportmodus als auch dem Komfortmodus frei kombinierbar.

## Patentansprüche

1. Vorrichtung zum Beschleunigen und/oder Verzögern eines Kraftfahrzeugs, die zumindest ein Betätigungselement (2, 2') aufweist, wobei das Betätigungselement (2, 2') durch das Aufbringen einer Betätigungskraft betätigt wird, **dadurch gekennzeichnet, dass** das Betätigungselement (2,2') weitestgehend wegfrei arbeitet, und die Vorrichtung in mindestens zwei fahrerspezifischen Modi betrieben werden kann.

2. Vorrichtung nach Anspruch 1, **dadurch gekennzeichnet, dass** die Vorrichtung zumindest eine Umschalteinrichtung aufweist, mittels derer der Modus der Vorrichtung eingestellt werden kann.

3. Vorrichtung nach einem der Ansprüche 1 oder 2, **dadurch gekennzeichnet, dass** die Modi sich bezüglich der Beschleunigungs- oder Verzögerungswerte, die einer Betätigungskraft zugeordnet sind, unterscheiden.

4. Vorrichtung nach einem der Ansprüche 1 bis 3, **dadurch gekennzeichnet, dass** jedem Modus mindestens eine Kennlinie für die Umwandlung eines Signals bezüglich der Betätigungskraft in einen Wert für die Beschleunigung oder Verzögerung des Kraftfahrzeugs zugeordnet ist.

5. Vorrichtung nach einem der Ansprüche 1 bis 4, **dadurch gekennzeichnet, dass** die Vorrichtung eine Reglereinheit (8) zum Regeln der Geschwindigkeit des Kraftfahrzeugs aufweist und die einstellbaren Modi sich bezüglich der Berücksichtigung von Einflüssen auf die Verzögerung oder Beschleunigung des Kraftfahrzeugs, die nicht unmittelbar von der Betätigungskraft auf die Betätigungsmittel (2, 2') abhängen, abhängen, bei der Einstellung der Geschwindigkeit des Kraftfahrzeugs unterscheiden.

6. Vorrichtung nach Anspruch 5, **dadurch gekennzeichnet, dass** in einem Modus die Geschwindigkeit des Kraftfahrzeugs nach Wegnahme der Betätigungskraft konstant gehalten wird.

7. Vorrichtung nach einem der Ansprüche 5 oder 6, **dadurch gekennzeichnet, dass** in einem Modus Einflüsse auf die Verzögerung oder Beschleunigung des Kraftfahrzeugs wirken und nicht ausgeregelt werden.

8. Vorrichtung nach einem der Ansprüche 1 bis 7, **dadurch gekennzeichnet, dass** diese eine Auswahleinheit umfasst, in der ein Auswahlmenü enthalten ist, aus dem der Fahrer des Kraftfahrzeugs unterschiedlichen Modi manuell auswählen kann.

9. Vorrichtung nach einem der Ansprüche 1 bis 8, **dadurch gekennzeichnet, dass** diese eine Anzeigevorrichtung umfasst, die zumindest das Auswahlmenü anzeigt.

10. Vorrichtung nach einem der Ansprüche 1 bis 9, **dadurch gekennzeichnet, dass** diese eine Anzeigevorrichtung umfasst, die den ausgewählten Modus anzeigt.

11. Verfahren zur Einstellung der Geschwindigkeit eines Kraftfahrzeugs, das zumindest ein Betätigungselement zum Beschleunigen oder Verzögern des Kraftfahrzeugs aufweist, **dadurch gekennzeichnet dass** das Betätigungselement im wesentlichen wegfrei arbeitet, und der Fahrer des Kraftfahrzeugs einen Modus auswählt, in dem die Vorrichtung zum Beschleunigen oder Verzögern des Kraftfahrzeugs betrieben werden soll und in Abhängigkeit des ausgewählten Modus die Betätigungskraft auf das mindestens eine Betätigungsmittel in einen Wert für eine Verzögerung oder Beschleunigung des Kraftfahrzeugs umgewandelt wird und/oder Einflüsse auf die Beschleunigung oder Verzögerung des Kraftfahrzeugs, die unabhängig von der Betätigungskraft sind, in eine Regelung der Geschwindigkeit des Kraftfahrzeugs einbezogen werden.

## Claims

1. Apparatus for acceleration and/or deceleration of a vehicle, which has at least one actuator (2, 2'), in which the actuator (2, 2') is actuated by applying an actuating force, **characterised in that** the actuator (2, 2') works to a large extent with a clear path and the apparatus can be operated in a least two driver specific modes.

2. Apparatus according to claim 1, **characterised in that** the apparatus has at least one switching device, by means of which the mode of the apparatus can be adjusted.

3. Apparatus according to one of claims 1 or 2, **characterised in that** the modes differ with reference to the acceleration or deceleration values, which are allocated to an actuating force.

4. Apparatus according to one of claims 1 to 3, **characterised in that** at least one characteristic curve for the conversion of a signal with reference to the actuating force into a value for the acceleration or deceleration of the vehicle is allocated to each mode.

5. Apparatus according to one of claims 1 to 4, **characterised in that** the apparatus has a control unit (8) for controlling the speed of the vehicle and the adjustable modes differ when adjusting the speed of the vehicle with reference to taking into consideration influences on the deceleration or acceleration of the vehicle, which do not directly depend on the actuating force on the actuators (2,2 ').

6. Apparatus according to claim 5, **characterised in that** in one mode the speed of the vehicle is kept constant after removing the actuating force.

7. Apparatus according to one of claims 5 or 6, **characterised in that** in one mode influences have an effect on the deceleration or acceleration of the vehicle and are not adjusted.

8. Apparatus according to one of claims 1 to 7, **characterised in that** this includes a selector unit, containing a selection menu, from which the driver of the vehicle can select various modes manually.

9. Apparatus according to one of claims 1 to 8, **characterised in that** this includes an indicator device, which indicates at least the selection menu.

10. Apparatus according to one of claims 1 to 9, **characterised in that** this includes an indicator device, which indicates the selected mode.

11. Method for adjusting the speed of a vehicle, which has at least one actuator for acceleration or deceleration of the vehicle, **characterised in that** the actuator works to a large extent with a clear path and the driver of the vehicle selects a mode, in which the apparatus for acceleration or deceleration of the vehicle is to be operated and depending on the mode selected the actuating force on at least one actuator is converted into a value for deceleration or acceleration of the vehicle and/or influences on the acceleration or deceleration of the vehicle, which are independent of the actuating force, are included in control of the speed of the vehicle.

## Revendications

1. Dispositif d'accélération et / ou de décélération d'un véhicule automobile présentant au moins un élément de commande (2, 2'), l'élément de commande (2, 2') étant commandé par apposition d'une force de commande, **caractérisé en ce que** l'élément de commande (2, 2) fonctionne essentiellement sans course et **en ce que** le dispositif peut fonctionner dans au moins deux modes spécifiques au conducteur.

2. Dispositif selon la revendication 1 **caractérisé en ce que** le dispositif présente au moins un dispositif de commutation au moyen duquel le mode du dispositif peut être réglé.

3. Dispositif selon l'une des revendications 1 ou 2, **caractérisé en ce que** les modes se différencient par rapport aux valeurs d'accélération ou de décélération qui sont affectées à une force de commande.

4. Dispositif selon l'une des revendications 1 à 3, **caractérisé en ce qu'**au moins une caractéristique pour la conversion d'un signal par rapport à la force de commande dans une valeur pour l'accélération ou la décélération du véhicule automobile est affectée à chaque mode.

5. Dispositif selon l'une des revendications 1 à 4, **caractérisé en ce que** le dispositif présente une unité de réglage (8) pour le réglage de la vitesse du véhicule automobile et **en ce que** les modes réglables se différencient par rapport à la prise en considération des influences sur l'accélération ou la décélération du véhicule automobile ne dépendant pas directement de la force de commande sur les moyens de commande (2 ,2'), lors du réglage de la vitesse du véhicule automobile.

6. Dispositif selon la revendication 5, **caractérisé en ce que**, dans un mode, la vitesse du véhicule automobile est maintenue constante après l'enlèvement de la force de commande.

7. Dispositif selon l'une des revendications 5 ou 6, **caractérisé en ce que** dans un mode les influences agissent sur la décélération ou l'accélération du véhicule automobile et ne sont pas régulées.

8. Dispositif selon l'une des revendications 1 à 7, **caractérisé en ce que** ce dernier comprend une unité de sélection dans laquelle se trouve un menu de sélection à partir duquel le conducteur du véhicule automobile peut sélectionner manuellement différents modes.

9. Dispositif selon l'une des revendications 1 à 8, **caractérisé en ce que** ce dernier comprend un système d'affichage qui affiche au moins le menu de sélection.

10. Dispositif selon l'une des revendications 1 à 9, **caractérisé en ce que** ce dernier comprend un système d'affichage qui affiche le mode sélectionné.

11. Procédé de réglage de la vitesse d'un véhicule automobile présentant au moins un élément de commande pour l'accélération ou la décélération du véhicule automobile, **caractérisé en ce que** l'élément de commande fonctionnant essentiellement sans course et **en ce que** le conducteur du véhicule automobile sélectionne un mode dans lequel le dispositif d'accélération ou de décélération du véhicule automobile doit être actionné et, en fonction du mode sélectionné, la force de commande sur au moins un élément de commande est convertie en une valeur pour une décélération ou une accélération du véhicule automobile et / ou les influences sur l'accélération ou la décélération du véhicule automobile, indépendantes de la force de commande, sont intégrées dans un réglage de la vitesse du véhicule automobile.
